# EUROPÄISCHE PATENTSCHRIFT

(11) **EP 1 508 889 B1**
(45) Veröffentlichungstag und Bekanntmachung des Hinweises auf die Patenterteilung: **24.09.2008**
(21) Anmeldenummer: 04103924.9
(22) Anmeldetag: 16.08.2004
(51) Int. Cl.: G08G 1/0962, G08G 1/0967, G06K 9/62

(54) **Fahrerinformationsvorrichtung**
Driver information device
Dispositif d'information du conducteur

(30) Priorität: 21.08.2003 DE 10338455
(43) Veröffentlichungstag der Anmeldung: 23.02.2005
(73) Patentinhaber: ROBERT BOSCH GMBH, 70442 Stuttgart (DE)
(72) Erfinder: Engelsberg, Andreas, 31141 Hildesheim (DE); Manstetten, Dietrich, 71139 Ehningen (DE); Kussmann, Holger, 31180 Giesen (DE); Placke, Lars, 30163 Hannover (DE); Stoerzel, Marc, 70825 Korntal-Muenchingen (DE); Schweiger, Ulrich, 70180 Stuttgart (DE)

(56) Entgegenhaltungen:
- EP-A- 1 359 557
- US-A1- 2002 037 104
- US-B1- 6 553 308
- US-B1- 6 671 615

## Beschreibung

### Stand der Technik

Die Erfindung geht aus von einer Fahrerinformationsvorrichtung nach der Gattung des Hauptanspruchs. Aus der DE 296 09 922 U1 ist bereits ein Gerät zur Erkennung von Straßenverkehrsschildern und zur Weiterverarbeitung von deren Informationsgehalt bekannt. Aus dem bewegten Fahrzeug heraus werden Straßenverkehrsschilder erfasst. Die erfasste Information wird von einem Bildanalysator ausgewertet. Die ermittelte Information wird im Armaturenbrett eines Fahrzeugs zum Beispiel in einer optischen Anzeige dargestellt. Mitunter sind jedoch, gegebenenfalls auch international gültige Verkehrsschilder, durch Zusatzschilder in Textform erweitert. Befindet sich ein Fahrer in einem Land, dessen Sprache er nicht mächtig ist, so kann er im Allgemeinen diese Zusatzschilder nicht verstehen. Auch eine Wiedergabe des Verkehrsschilds allein kann ihm keine ausreichende Information übermitteln. Gegebenenfalls könnte sogar eine falsche Information ermittelt werden, wenn zum Beispiel Verbote nur zeitweise gelten, diese zeitliche Beschränkung jedoch nur aus dem für den Fahrer unverständlichen Zusatztext des Verkehrsschilds hervorgeht. Darüber hinaus mag es auch andere Hinweisschilder geben, die zum Beispiel auf touristische Sehenswürdigkeiten hinweisen und die ein Fahrer dann ebenfalls nicht verstehen kann. Eine entsprechende Verkehrsschilderkennung kann bei derartigen Hinweistafeln nicht weiterhelfen. Ferner ist es bekannt, Verkehrsinformationen zum Beispiel über Funk zu übermitteln. Ist ein Fahrer jedoch der Landessprache nicht mächtig, so kann er die Verkehrshinweise nicht verstehen. Ebenfalls können Informationen über Datenträger oder über eine Funkabfrage, zum Beispiel über das Internet, bereitstehen, die auf Grund des Sprachhindernisses von einem Fahrer des Fahrzeugs nicht verstanden werden können.

Ferner ist es auch bekannt, in einer digitalen Karte Verkehrsschilder abzulegen und bei Erreichen der entsprechenden Position auszugeben. Hierdurch kann jedoch nicht auf aktuelle Änderungen reagiert werden. Ferner ist es auch möglich, die Information des Verkehrsschilds über Funk codiert an ein Fahrzeug zu übertragen. Hierfür sind jedoch z.T. erhebliche Aufwendungen für die entsprechende Infrastruktur erforderlich.

Aus der US 2002/0037104 A1 ist ein Verfahren und eine Vorrichtung zum tragbaren Erkennen einer Textnachricht in einer Bilderfolge bekannt. Der erkannte Text wird automatisch in eine andere Sprache übersetzt und entsprechend wird die Übersetzung angezeigt. Das Verfahren wird beispielsweise in einer tragbaren Navigationsvorrichtung in einem Kraftfahrzeug verwendet. Anhand einer erkannten Straßennummer und Ausfahrtsnummer können zusätzliche Informationen zu Hotels oder Sehenswürdigkeiten automatisch bereitgestellt werden.

### Vorteile der Erfindung

Die erfindungsgemäße Fahrerinformationsvorrichtung mit den Merkmalen des Hauptanspruchs hat demgegenüber den Vorteil, dass die Fahrerinformationsvorrichtung Text in einer ersten Sprache erfasst, diesen in eine zweite Sprache übersetzt und den übersetzten Text über eine Ausgabeeinheit ausgibt. Ein Sprachhindernis für einen Fahrer wird hiermit ausgeräumt. Der Fahrer kann an ihn herangetragene Hinweise, insbesondere Hinweise, die die Führung des Fahrzeugs betreffen, in seine oder in eine andere, ihm bekannte Sprache übersetzen lassen. Unsicherheiten durch Zögern vor Hinweisschildern bzw. gegebenenfalls sogar das Übertreten von Verboten oder umgekehrt ein unnötiges Umkehren vor einem vermeintlichen Sperrschild, kann hierdurch verhindert werden. Damit wird einerseits die Fahrsicherheit erhöht und andererseits der Fahrer sowohl vor unnötigen Umwegen, als auch vor möglicher Bestrafung durch Unkenntnis von Textinformationen im Straßenverkehr geschützt. Zudem stehen einem Fahrer alle die Informationsquellen zur Verfügung, die auch jemandem zur Verfügung stehen, der der jeweiligen Landessprache mächtig ist.

Durch die in den Unteransprüchen aufgeführten Maßnahmen sind vorteilhafte Weiterbildungen und Verbesserungen der im Hauptanspruch angegebenen Fahrerinformationsvorrichtung möglich. Besonders vorteilhaft ist, dass die Texterfassungseinheit eine Kamera zur Erfassung der Fahrzeugumgebung aufweist. Hierdurch können Texttafeln und/oder Verkehrsschilder hinsichtlich ihres Textinhaltes von der Texterfassungseinheit der Fahrerinformationsvorrichtung erfasst, übersetzt und ausgegeben werden. Eine manuelle Datenzuführung kann entfallen. Hierbei ist es vorteilhaft, dass ein Benutzer durch eine entsprechende Steuerung der Kameravorrichtung zu übersetzenden Text auswählen kann.

Ferner ist es vorteilhaft, dass der übersetzte Text akustisch über einen Lautsprecher in der übersetzten Form ausgegeben wird. Hierdurch kann ein Benutzer während der Ausgabe des Textes weiterhin das Verkehrsgeschehen verfolgen.

Erfindungsgemäß ist eine Anzeige zur Darstellung des übersetzten Textes vorgesehen. Dies ist insbesondere dann vorteilhaft, wenn ein längerer Text dargestellt werden soll. Erfindungsgemäß wird der Text in Verbindung mit einem dem Text zugeordneten Symbol oder mit einem den Text ergänzenden Symbol in der Anzeige dargestellt. Durch eine Verknüpfung mit einem Symbol kann die Information besonders leicht wahrgenommen werden. Hierbei ist es insbesondere vorteilhaft, das Symbol als ein Verkehrsschild auszuführen, sodass ein Benutzer leicht einen Bezug zwischen der angezeigten Information und dem vor ihm befindlichen Verkehrsschild herstellen kann.

Es ist vorteilhaft, die Anzeige der Fahrerinformationsvorrichtung in eine bereits vorhandene Anzeige im Fahrzeug zu integrieren, die bevorzugt einer Darstellung einer Vielzahl von Fahrzeugfunktionen dient.

In einer ersten Ausfiihrungsform ist es möglich, einen Datenspeicher mit einem Lexikon zur automatischen Durchführung der Übersetzung im Fahrzeug mitzuführen. Gegebenenfalls sind jedoch in diesem Datenspeicher nicht alle Worte vorhanden. Vorteilhaft ist daher die Fahrerinformationsvorrichtung in einer bevorzugten Ausführungsform mit einer Funkschnittstelle ausgestattet, über die der erste, zu übersetzende Text an eine Dienstezentrale übermittelt wird. Der Text wird in der Dienstezentrale unter Nutzung von in der Dienstezentrale außerhalb des Fahrzeugs vorhandenen Datenspeichern und Lexika automatisch übersetzt und über die Funkschnittstelle in übersetzter Form an das Fahrzeug zurückübertragen.

Ferner ist es vorteilhaft, weitere Datenschnittstellen zur Übermittlung von zu übersetzendem Text an der Navigationsvorrichtung vorzusehen. Zum Beispiel können über eine Rundfunkempfangsvorrichtung ein Rundfunkprogramm, insbesondere Verkehrsinformationen, an die Fahrerinformationsvorrichtung übermittelt werden, die die empfangenen Informationen übersetzt und ausgibt. Ferner können auch über einen Datenträger oder über eine Datenschnittstelle Informationen, zum Beispiel zu Sehenswürdigkeiten, an die Fahrerinformationsvorrichtung übertragen und von dieser ebenfalls übersetzt werden. Besondere Sprachkenntnisse zum Verständnis dieser weiteren Informationen sind dann für den Fahrer nicht mehr erforderlich.

### Zeichnung

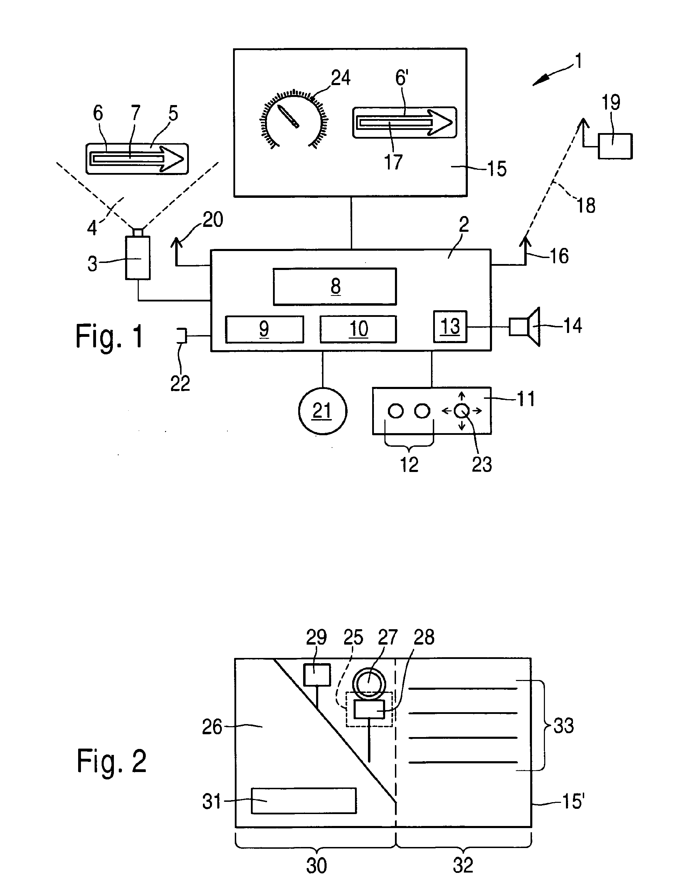

Ausführungsbeispiele der Erfindung sind in der Zeichnung dargestellt und in der nachfolgenden Beschreibung näher erläutert. Es zeigen Figur 1 eine erfindungsgemäße Fahrerinformationsvorrichtung, Figur 2 eine Anzeigendarstellung in einer erfindungsgemäßen Fahrerinformationsvorrichtung.

### Beschreibung des Ausführungsbeispiels

Die erfindungsgemäße Fahrerinformationsvorrichtung ist vorzugsweise in ein Kraftfahrzeug eingebaut. Neben der beschriebenen Übersetzungsfunktion können in die Fahrerinformationsvorrichtung noch weitere Funktionen, wie zum Beispiel ein Autoradioempfang, eine Fahrzeugnavigation oder eine Bordcomputerfunktion integriert sein. Im Folgenden wird lediglich die Übersetzungsfunktion erläutert.

In der Figur 1 ist eine erfindungsgemäße Fahrerinformationsvorrichtung 1 dargestellt, die in ein Fahrzeug integriert ist. Eine Recheneinheit 2 ist mit einer Kamera 3 verbunden. Die Kamera 3 erfasst einen Blickwinkelbereich 4, der vorzugsweise ein Bereich vor dem Fahrzeug ist, in den das Fahrzeug hineinfährt. In dem hier gewählten Ausführungsbeispiel erfasst die Kamera 3 ein Verkehrsschild 5, das sich in dem Blickwinkelbereich 4 der Kamera 3 befindet. Das Verkehrsschild 5 besteht einerseits aus einem Symbol 6 und andererseits einem Textfeld 7 in einer ersten Sprache. Die Erfassung mit der Kamera 3 erfolgt dabei in der Weise, dass die Kamera zunächst eine Videoerfassung der Fahrzeugumgebung in ihrem Blickwinkelbereich 4 durchführt. Anschließend wird das so ermittelte Bild einer Texterkennung und ggf. auch einer Symbolerkennung unterzogen. Die Auswerteeinheit 8 übersetzt nun den erkannten Text aus der ersten Sprache in eine automatisch vorgegebene bzw. eingestellte zweite Sprache.

Aus den von der Kamera 3 erfassten Bilddaten werden dabei die Bilddaten des Symbols 6 und des ersten Textfelds 7 extrahiert und von einer Auswerteeinheit 8 der Recheneinheit 2 verarbeitet. Hierbei vergleicht die Auswerteeinheit 8 das Symbol 6 mit in einem Symbolspeicher 9 gespeicherten Symbolen zur Erkennung des erfassten Symbols. In dem Symbolspeicher 9 sind bevorzugt grafische Daten von Verkehrsschildern abgelegt.

Die Auswerteeinheit 8 führt eine Texterfassung durch, indem sie entweder ihr anderweitig zugeführte Textdaten unmittelbar verarbeitet oder Text aus den von der Kamera 3 ermittelten Bilddaten ermittelt. Hierzu wird der Textinhalt des ersten Textfeldes 7 durch eine Textanalyse des Bildes der Kamera 3 ermittelt. Die entsprechenden Bilddaten werden hierbei für die Verarbeitung in Textdaten umgewandelt. Der Textinhalt des ersten Textfeldes 7 wird anschließend durch Zugriff auf einen Speicher 10 mit einem gespeicherten Lexikon aus der ersten Sprache in eine zweite Sprache übersetzt. Die Übersetzung kann dabei in der Weise erfolgen, dass die Auswerteeinheit 8 über ein Übersetzungsprogramm verfügt, das den gewählten Text analysiert und übersetzt. In einer weiteren Ausführungsform kann auch ein Abgleich zwischen den Wörtern mittels Wörterbüchern erfolgen, bei denen nicht ein Text, sondern einzelne, zusammengesetzte bzw. allgemein feststehende Ausdrücke ( z.B. "Anlieger frei") übersetzt werden. In einer ersten Ausführungsform erfolgt diese Übersetzung automatisch. Ferner kann jedoch die Übersetzung auch mittels einer Bedieneinheit 11 angefordert werden.

Die Bedieneinheit 11 weist Bedienelemente, zum Beispiel Drehknöpfe oder Druckknöpfe 12 auf, die zum Beispiel der Auswahl der zu übersetzenden Sprache des ersten Textes dienen. Fährt ein Fahrer zum Beispiel nach Italien, so kann er über die Bedieneinheit 11 als zu übersetzende Sprache Italienisch wählen. Die zweite Sprache kann entweder werksseitig festgelegt sein oder von dem Benutzer aus mehreren möglichen Sprachen ausgewählt werden. Ist als Zielsprache zum Beispiel Deutsch eingestellt, so wird, wenn als erste Sprache Italienisch eingestellt ist, die Auswerteeinheit versuchen, den erfassten Text aus dem Italienischen in die deutsche Sprache durch Zugriff auf den Speicher 10 zu übersetzen. Gelingt dies nicht, so wird eine entsprechende Fehlermeldung ausgegeben. In einer weiteren Ausführungsform ist es vorteilhaft, als zweite Sprache, in die der erfasste Text übersetzt wird, diejenige Sprache zu wählen, die für eine Bedienerführung bzw. Menüsteuerung der Fahrerinformationsvorrichtung eingestellt worden ist.

Für die Ausgabe sind akustische und/oder optische Ausgabemittel vorgesehen. Für eine akustische Ausgabe wird der übersetzte Text an eine Spracherzeugungseinheit 13 weitergegeben, die den übersetzten Text in ein Sprachsignal zur akustischen Ausgabe über einen Lautsprecher 14 umwandelt. In einer bevorzugten Ausführungsform ist die Recheneinheit 2 mit einer Anzeige 15 verbunden. In der Anzeige 15 wird das ermittelte Symbol 6' dargestellt, das dem erfassten Symbol 6 entspricht und das aus dem Symbolspeicher 9 geladen wird. In das dargestellte Symbol 6' wird der übersetzte Text in einem übersetzten Textfeld 17 eingeblendet. Handelt es sich bei dem Verkehrsschild zum Beispiel um ein Hinweisschild für eine Einbahnstraße, so findet sich in dem ersten Textfeld 7 der italienische Text "senso unico". Die Auswerteeinheit 8 erkennt sowohl das Symbol 6 für eine Einbahnstraße, als auch in dem ersten Textfeld 7 den entsprechenden Text, der unter Zugriff auf den Speicher 10 mit dem Wort "Einbahnstraße" übersetzt wird. Das Wort "Einbahnstraße" wird anschließend in dem übersetzten Textfeld 17 in der Anzeige 15 eingeblendet. In einer bevorzugten Ausführungsform kann eine Plausibilitätsprüfung stattfinden, ob der entsprechende, in dem übersetzten Textfeld 17 dargestellte Text mit dem Symbolgehalt des dargestellten Symbols 6' übereinstimmt.

Sollten Wörter eines zu übersetzenden Textes nicht in dem Speicher 10 abgelegt sein oder ist kein entsprechender Speicher 10 im Fahrzeug vorgesehen, so weist die Recheneinheit 2 eine Funkschnittstelle 16 auf, die über eine Funkverbindung 18, zum Beispiel eine Mobilfunkverbindung, eine Verbindung zu einer Dienstezentrale 19 herstellt. Der zu übersetzende erste Text wird über die Funkverbindung 18 an die Dienstezentrale 19 übermittelt, die entsprechende Speicher und Übersetzungsrechner aufweist, die bevorzugt eine automatische Übersetzung des empfangenen ersten Textes und eine Rückübertragung des übersetzten Texts an die Recheneinheit 2 ermöglichen. Über die Mobilfunkverbindung 18 können der Fahrerinformationsvorrichtung 1 auch weitergehende Informationen zugeführt werden, zum Beispiel Inhalte von Internetseiten. Diese können gegebenenfalls durch die Auswerteeinheit 8 in eine gewünschte Sprache übersetzt werden.

Ferner weist die Fahrerinformationsvorrichtung 1 eine Rundfunkempfangsvorrichtung 20 auf, mit der ein Rundfunksignal, insbesondere ein Rundfunksignal mit Verkehrsinformationen, empfangen werden kann. Verkehrsinformationen können entweder in codierter Form, in Textform oder in gesprochener Form an die Fahrerinformationsvorrichtung 1 übertragen werden. Für die Ausgabe der codierten Verkehrsinformationen weist die Fahrerinformationsvorrichtung 1 eine nicht dargestellte Decodiereinheit auf. Die in Textform oder in gesprochener Form übertragenen Verkehrsinformationen werden ebenfalls von der Auswerteeinheit 8 in die eingestellte zweite Sprache übersetzt und ausgegeben.

Die Fahrerinformationsvorrichtung weist ferner ein Datenträgerlaufwerk 21 auf, in das ein Datenträger mit weiteren Daten, zum Beispiel mit touristischen Daten von Sehenswürdigkeiten, eingelegt werden kann. Auch diese Daten können von der Auswerteeinheit 8 entsprechend übersetzt werden. In einer weiteren Ausführungsform kann auch der Speicher 10 zur Speicherung des Lexikons in Form eines Datenträgers der Fahrerinformationsvorrichtung 1 zugeführt werden. Ferner weist die Fahrerinformationsvorrichtung 1 in einer weiteren Ausführungsform eine Datenschnittstelle 22 zum Anschluss weiterer elektronischer Geräte auf, zum Beispiel zum Anschließen eines Mobiltelefons oder eines tragbaren Kleincomputers. Auch von diesen Geräten können entsprechende Daten an die Fahrerinformationsvorrichtung 1 zur Übersetzung und Ausgabe übertragen werden.

Die Anzeige 15 ist in einer ersten Ausführungsform als eine Flüssigkristallanzeige ausgeführt. Sie kann für die Ausgabe einer Vielzahl von Fahrzeugdaten verwendet werden. So können zum Beispiel Informationen für die Fahrzeugnavigation in der Anzeige 15 dargestellt werden. Hierfür ist die Anzeige 15 zum Beispiel an einer Mittelkonsole des Fahrzeugs angeordnet. In einer weiteren Ausführungsform kann die Anzeige 15 auch in ein Kombiinstrument zur Darstellung einer Vielzahl von Fahrzeugdaten vor dem Fahrer angeordnet sein. So kann zum Beispiel neben dem Symbol 6' eine Skalendarstellung 24 vorgesehen sein, mit der zum Beispiel die Fahrzeuggeschwindigkeit dargestellt wird. Die Anzeige 15 kann jedoch auch eine eigene Anzeige sein, die ansonsten der Darstellung des von der Kamera 3 erfassten Blickwinkelbereichs 4 dient. In einer weiteren Ausführungsform kann die Anzeige 15 auch als ein sogenanntes Head-Up-Display ausgeführt sein, bei dem ein reelles oder virtuelles Bild auf die Windschutzscheibe des Fahrzeugs vor dem Fahrer projiziert wird. Informationen über den übersetzten Text können somit unmittelbar in räumlichem Bezug, zum Beispiel als Untertitel, zu dem von der Kamera 3 erfassten Text in die Windschutzscheibe des Fahrzeugs eingeblendet werden.

Die Bedieneinheit 11 weist eine Cursorsteuerung 23 auf, die der Bewegung eines Auswahlrahmens 25 dient, der in der Figur 2 dargestellt ist. In der Figur 2 ist in einem weiteren Ausführungsbeispiel eine Anzeigendarstellung 15' gezeigt. In einem linken Bereich der Anzeigendarstellung ist ein von der Kamera 3 im ihrem Blickwinkelbereich erfasster Raum vor dem Fahrzeug dargestellt. Erkennbar ist hierbei eine Wegefläche 26, neben der ein erstes Verkehrsschild 27 mit einer Textzusatztafel 28 und in etwas größerer Entfernung hierzu eine Texttafel 29 aufgestellt sind. Der Auswahlrahmen kann innerhalb des Bildbereichs 30 bewegt werden, wobei der in dem Auswahlrahmen 25 sich befindende Text von der Recheneinheit 2 übersetzt und ausgegeben wird. In dem hier dargestellten Ausführungsbeispiel befindet sich der Auswahlrahmen 25 über der ersten Textzusatztafel 28. Die erste Textzusatztafel 28 ist ein Zusatzschild zu dem Verkehrsschild 27, das ein Verbot für Fahrzeuge aller Art bezeichnet. In der Textzusatztafel 28 ist zum Beispiel eine Ausnahme angegeben, z.B. mit dem Inhalt "Anlieger frei" oder "nur Sonntags". Die Übersetzung der Textzusatztafel 28 in die zweite Sprache wird in einem weiteren Textfeld 31 in den Bildbereich 30 eingeblendet. Verschiebt nun ein Benutzer mit der Cursorsteuerung 23 den Auswahlrahmen auf die Texttafel 29, so wird der Inhalt der Texttafel 29 übersetzt zur Anzeige gebracht. Handelt es sich hierbei um einen längeren Text, so kann ein Textbereich 32 vorgesehen sein, bei dem der Text, in der Figur 2 in Zeilen 33 angedeutet, in Textform in der Anzeigendarstellung 15' eingeblendet werden. Bei dem Text kann es sich zum Beispiel um touristische Hinweistafeln, Werbeplakate, aber auch um Erläuterungen zum Befahren einer bestimmten Fahrstrecke handeln.

Neben einer Darstellung des übersetzten Texts in reiner Textform ist damit eine Verknüpfung zwischen einem erfassten Bild und einer Textausgabe möglich, wie es in der Figur 2 dargestellt ist. Jedoch kann auch das erfasste Bild einem bestimmten Symbol zugeordnet und der Text in räumlicher Verbindung mit dem Symbol dargestellt werden. In beiden Fällen ist es möglich, den übersetzten Text entweder in ein erfasstes Bild bzw. in ein bestimmtes Symbol einzublenden oder den übersetzten Text in einem zusätzlichen Textfeld darzustellen.

Neben Zusatzschildern, wie zum Beispiel den Begrenzungen "auf 2 km", "bei Nässe" oder "Anlieger frei" können auch Textfelder auf separaten Hinweistafeln erkannt werden, die sich zum Beispiel auf ortsbezogene Einrichtungen beziehen. Hierdurch können auch Richtungshinweise wie "Schwimmbad", "Industriegebiet" oder "Rathaus" übersetzt werden. Bei einer Fahrt in Italien wird zum Beispiel der Ausdruck "Municipio" mit "Rathaus" übersetzt, wenn eine Übersetzung von der italienischen in die deutsche Sprache eingestellt ist. Zusätzlich ist es auch möglich, Informationen auf Ortseingangsschildern zu erfassen, wie zum Beispiel "Universitätsstadt Tübingen". Mitunter sind auch Wechselverkehrszeichen vorgesehen, die Verkehrsinformationen in Textform ausgeben. Diese können ebenfalls übersetzt und angezeigt werden. Zum Beispiel ist es auf französischen Autobahnen üblich, mit derartigen Wechselverkehrszeichen auf Gefahren hinzuweisen. Liegen keine Gefahren vor, werden allgemeine Verkehrshinweise gegeben. Ein Fahrer, der der französischen Sprache nicht mächtig ist, kann nicht entscheiden, ob es sich um einen für ihn hochrelevanten Hinweis oder nur um einen allgemeinen Hinweis, wie zum Beispiel "Kontrollieren Sie regelmäßig Ihren Reifendruck" handelt. Mit der Übersetzung kann er jedoch eindeutig entscheiden, ob die Information für ihn wichtig ist, oder nicht. Neben Schildern oder Tafeln können mit der Kamera 3 auch z.B. Hausbeschriftungen, Plakate oder ähnliches erfasst werden.

## Patentansprüche

1. Fahrerinformationsvorrichtung mit einer Texterfassungseinheit (2, 3) und mit einer Ausgabeeinheit (14, 15), wobei der Text (7, 28, 29) in einer ersten Sprache erfasst wird und übersetzt in eine zweite Sprache mit der Ausgabeeinheit (14, 15) ausgegeben wird, wobei die Ausgabeeinheit eine Anzeige (15) zur Ausgabe des in die zweite Sprache übersetzten Texts aufweist, **dadurch gekennzeichnet, dass** zu dem Text (17, 31) ein dem Text zugeordnetes und/oder ein den Text ergänzendes Symbol (6', 27) in der Anzeige dargestellt wird und dass eine Plausibilitätsprüfung durchgeführt wird, ob der Text mit dem Symbolgehalt des zugeordneten bzw. ergänzenden Symbols übereinstimmt.

2. Fahrerinformationsvorrichtung nach Anspruch 1, **dadurch gekennzeichnet, dass** die Texterfassungseinheit eine Kamera (3) zur Erfassung der Fahrzeugumgebung (4) aufweist.

3. Fahrerinformationsvorrichtung nach Anspruch 2, **gekennzeichnet durch** eine Bedieneinheit (11) zum Schwenken der Kamera (3) und/oder zur Festlegung des zu übersetzenden Textes in der ersten Sprache.

4. Fahrerinformationsvorrichtung nach einem der vorherigen Ansprüche, **gekennzeichnet durch** einen Lautsprecher (14) zur akustischen Ausgabe des Texts in der zweiten Sprache.

5. Fahrerinformationsvorrichtung nach einem der vorhergehenden Ansprüche, **dadurch gekennzeichnet, dass** das Symbol (6') ein Verkehrsschild ist

6. Fahrerinformationsvorrichtung nach einem der vorhergehenden Ansprüche, **dadurch gekennzeichnet, dass** die Anzeige (15) ein Anzeigeinstrument zur Anzeige einer Vielzahl von Fahrzeugdaten (24) ist.

7. Fahrerinformationsvorrichtung nach einem der vorherigen Ansprüche, **dadurch gekennzeichnet, dass** die Anzeige (15) als ein Head-Up-Display ausgeführt ist, wobei ein reelles oder virtuelles Bild auf eine Windschutzscheibe eines Fahrzeugs derart projiziert wird, dass der in die zweite Sprache übersetzte Text als Untertitel zu dem von der Kamera erfassten Text in die Windschutzscheibe des Fahrzeugs eingeblendet wird.

8. Fahrerinformationsvorrichtung nach einem der vorherigen Ansprüche, **gekennzeichnet durch** eine Funkschnittstelle (16) zur Übertragung des Textes in der ersten Sprache an eine Dienstezentrale (19) und zur Rückübermittlung des übersetzten Textes in der zweiten Sprache.

9. Fahrerinformationsvorrichtung nach einem der vorherigen Ansprüche, **gekennzeichnet durch** eine Datenschnittstelle (22) zur Zuführung von Text an die Fahrerinformationsvorrichtung.

## Claims

1. Driver information device having a text recording unit (2, 3) and having an output unit (14, 15), wherein the text (7, 28, 29) is recorded in a first language and is output translated into a second language with the output unit (14, 15), wherein the output unit has a display (15) for outputting the text which has been translated into the second language, **characterized in that** for the text (17, 31) a symbol (6', 27) which is assigned to the text and/or which supplements the text is displayed on the display, and **in that** a plausibility check is carried out as to whether the text corresponds to the symbol content of the assigned or supplementary symbol.

2. Driver information device according to Claim 1, **characterized in that** the text recording unit has a camera (3) for recording the surroundings (4) of the vehicle.

3. Driver information device according to Claim 2, **characterized by** an operator control unit (11) for pivoting the camera (3) and/or for defining the text in the first language which is to be translated.

4. Driver information device according to one of the preceding claims, **characterized by** a loudspeaker (14) for acoustically outputting the text in the second language.

5. Driver information device according to one of the preceding claims, **characterized in that** the symbol (6') is a road sign.

6. Driver information device according to one of the preceding claims, **characterized in that** the display (15) is a display instrument for displaying a plurality of vehicle data items (24).

7. Driver information device according to one of the preceding claims, **characterized in that** the display (15) is embodied as a head-up display, wherein a real or virtual image is projected onto a windscreen of a vehicle in such a way that the text which is translated into the second language is included in the display on the windscreen of the vehicle as a subtitle for the text recorded by the camera.

8. Driver information device according to one of the preceding claims, **characterized by** a radio interface (16) for transmitting the text in the first language to a service control centre (19) and for transmitting back the translated text in the second language.

9. Driver information device according to one of the preceding claims, **characterized by** a data interface (22) for feeding text to the driver information device.

## Revendications

1. Dispositif d'information du conducteur comportant une unité de saisie de texte (2, 3) et une unité d'émission (14, 15), le texte (7, 28, 29) étant saisi dans une première langue pui émis, traduit dans une seconde langue par l'unité d'émission (14, 15),
l'unité d'émission comportant un afficheur (15) pour émettre le texte traduit dans la seconde langue,
**caractérisé en ce que**
pour le texte (17, 31), on a représenté dans l'afficheur, un symbole (6', 27) associé au texte et/ ou complétant le texte, et
un contrôle de plausibilité est effectué pour déterminer si le texte concorde au contenu du symbole associé ou du symbole complémentaire.

2. Dispositif d'information du conducteur selon la revendication 1,
**caractérisé en ce que**
l'unité de saisie de texte comporte une caméra (3) pour saisir l'environnement (4) du véhicule.

3. Dispositif d'information du conducteur selon la revendication 2,
**caractérisé par**
une unité de service (11) pour basculer la caméra (3) et/ ou pour fixer le texte à traduire dans la première langue.

4. Dispositif d'information du conducteur selon les revendications précédentes,
**caractérisé par**
un haut-parleur (14) pour l'émission vocale du texte dans la seconde langue.

5. Dispositif d'information du conducteur selon les revendications précédentes,
**caractérisé en ce que**
le symbole (6') est un panneau de circulation.

6. Dispositif d'information du conducteur selon les revendications précédentes,
**caractérisé en ce que**
l'afficheur (15) est un instrument d'affichage pour afficher un grand nombre de données (24) du véhicule.

7. Dispositif d'information du conducteur selon les revendications précédentes,
**caractérisé en ce que**
l'afficheur (15) est un afficheur frontal et une image réelle ou virtuelle est projetée sur le pare-brise du véhicule de façon que le texte traduit dans la seconde langue apparaisse sur le pare-brise du véhicule comme sous-titre du texte saisi parla caméra.

8. Dispositif d'information du conducteur selon les revendications précédentes,
**caractérisé par**
une interface radio (16) pour transmettre le texte dans la première langue à une centrale à distance (19) et pour transmettre en retour le texte traduit dans la seconde langue.

9. Dispositif d'information du conducteur selon les revendications précédentes,
**caractérisé par**
une interface de données (22) pour fournir le texte au dispositif d'information du conducteur.
